# EUROPÄISCHE PATENTSCHRIFT

(11) **EP 2 728 627 B1**
(45) Veröffentlichungstag und Bekanntmachung des Hinweises auf die Patenterteilung: **21.11.2018**
(21) Anmeldenummer: 13178855.6
(22) Anmeldetag: 01.08.2013
(51) Int. Cl.: H02S 40/34

(54) **Verbindungseinrichtung und Anordnung hiermit und mit einem Photovoltaikmodul**
Connection device and assembly with the same and with a photovoltaic module
Dispositif de liaison et agencement doté de celui-ci et d'un module photovoltaïque

(30) Priorität: 05.11.2012 DE 102012220088
(43) Veröffentlichungstag der Anmeldung: 07.05.2014
(73) Patentinhaber: SEMIKRON Elektronik GmbH & Co. KG, 90431 Nürnberg (DE)
(72) Erfinder: Halaj, Jan, 921 01 Piestany (SK); Kavicky, Pavel, 921 01 Piestany (SK); Kikta, Peter, 92202 Krakovany (SK); Mateicka, Marian, 95607 Behynce (SK); Starovecky, Stefan, 921 01 Piestany (SK)

(56) Entgegenhaltungen:
- WO-A1-2011/132748
- DE-A1-102004 036 697
- US-A- 4 392 009

## Beschreibung

Die Erfindung beschreibt eine Verbindungseinrichtung, auch bekannt als Junction Box, sowie eine Anordnung einer derartigen Verbindungseinrichtung mit einem Photovoltaikmodul. Verbindungseinrichtungen der genannten Art sind fachüblich direkt an einem Photovoltaikmodul angeordnet und dienen der elektrischen Verbindung innerhalb einer Photovoltaikanlage, insbesondere der Verbindung zu weiteren Photovoltaikmodulen aber auch zu einer Wechselrichtereinrichtung. Üblicherweise sind in einer Photovoltaikanlage die einzelnen Photovoltaikmodule in Reihe und mit der Wechselrichtereinrichtung verbunden, wofür die Verbindungseinrichtung noch eine, meist als Bypass-Diodenschaltung ausgestaltete, Schaltungsanordnung aufweist.

Diese Schaltungsanordnung kann abhängig von der internen Verschaltung des Photovoltaikmoduls eine Mehrzahl von in Reihe geschalteten Bypass-Dioden aufweisen. Somit hat die Schaltungsanordnung meist die Aufgabe im Fehlerfall des zugeordneten Photovoltaikmoduls dieses zu überbrücken und den Stromfluss in der gesamten Photovoltaikanlage zu gewährleisten.

Fachüblich sind die gattungsgemäßen Verbindungseinrichtungen auf der Rückseite der Solarzellen eines Photovoltaikmoduls angeordnet. Die Schaltungsanordnung der Verbindungseinrichtung ist ebenso fachüblich direkt mit den Solarzellen, genauer mit einer Mehrzahl von in Reihe geschalteten Solarzellen, mittels Flachleitern, elektrisch leitend verbunden.
Den Stand der Technik bildet beispielhaft die DE 10 2005 044 939 A1. Aus dieser Druckschrift ist eine elektrische Anschlussdose zum elektrischen Anschluss von Solarzellen eines Solarzellenmoduls bekannt. Diese Anschlussdose weist ein Gehäuse mit wenigstens einer Schutzeinrichtung auf. Weiterhin weist die Anschlussdose eine Verbindungseinrichtung aus gut wärmeleitfähigem Material zum wärmeleitenden Verbinden der Schutzeinrichtung mit einer vorhandenen Einrichtung des Solarzellenmoduls auf.
Aus der WO 2011/132748 A1 ist ein Photovoltaikmodul mit hoher Zuverlässigkeit erzielt durch die Erhöhung der Wärmefreisetzung aus der Bypass-Diode bekannt. Das Photovoltaikmodul umfasst eine Mehrzahl von Solarzellen, ein Halteelement an einem Rand des Photovoltaikmodul und eine Wärmeabgabeplatte, beabstandet von den Solarzellen und angeordnet an dem Halteelement auf. Die Bypass-Diode ist an der Wärmeabgabeplatte angebracht, um von den Solarzellen beabstandet zu sein und um mit den Solarzellen elektrisch verbunden zu werden. Die Befestigungsfläche der Bypass-Diode ist der Wärmeabgabeplatte hierbei zugewandt.
In Kenntnis des oben genannten Standes der Technik liegt der Erfindung die Aufgabe zugrunde, eine Verbindungseinrichtung und eine Anordnung mit einer derartigen Verbindungseinrichtung und mit einem Photovoltaikmodul vorzustellen, wobei die Kühlung der Schaltungseinrichtung im Inneren der Verbindungseinrichtung verbessert ist.
Diese Aufgabe wird erfindungsgemäß gelöst durch eine Verbindungseinrichtung mit den Merkmalen des Anspruchs 1, sowie durch eine Anordnung mit den Merkmalen des Anspruchs 4. Bevorzugte Ausführungsformen sind in den jeweiligen abhängigen Ansprüchen beschrieben.
Die Erfindung beschreibt eine Verbindungseinrichtung zur Anordnung an einem Rahmen eines Photovoltaikmoduls. Die Verbindungseinrichtung weist erfindungsgemäß einen thermisch leitfähigen Grundkörper, der vorzugsweise als Metallformkörper ausgebildet ist, auf.

Der Grundkörper weist einen Kontaktflächenabschnitt und eine Schaltflächenabschnitt auf. Der Kontaktflächenabschnitt dient zur thermischen Kontaktierung mit dem oben genannten Rahmen eines Photovoltaikmoduls. Der Schaltflächenabschnitt dient zur Anordnung einer Schaltungsanordnung, die vorzugsweise als eine Mehrzahl von in Reihe geschalteten Dioden ausgebildet ist.

Hierbei ist die Schaltungsanordnung mit dem Schaltflächenabschnitt des Grundkörpers thermisch leitend und elektrisch isolierend verbunden, wobei die in der Schaltungsanordnung entstehende Wärme über den Grundkörper und den Kontaktflächenabschnitt auf den Rahmen des Photovoltaikmoduls abgeführt werden kann.

Die Verbindungseinrichtung weist weiterhin ein elektrisch isolierendes Gehäuse, das den Kontaktflächenabschnitt freispart, sowie erste und zweite Anschlusselemente auf. Die ersten Anschlusselemente sind zur elektrischen Verbindung der Schaltungsanordnung mit Solarzellen des Photovoltaikmoduls ausgebildet, während die zweiten Anschlusselemente zur elektrischen Verbindung der Schaltungsanordnung mit weiteren Komponenten wie einem Stromrichter oder weiteren Verbindungseinrichtungen mit zugeordneten Photovoltaikmodulen, die gemeinsam eine Photovoltaikanlage ausbilden, ausgebildet sind.

Es kann auch bevorzugt sein, wenn das Gehäuse und alternativ oder zusätzlich der Grundkörper mechanische Verbindungsmittel, insbesondere Hülsen, aufweist.

Es ist vorteilhaft, wenn die Schaltungsanordnung der Verbindungseinrichtung mindestens ein elektrisches Substrat aufweist, das unmittelbar auf dem Schaltflächenabschnitt angeordnet und thermisch leitend und elektrisch isolierend mit dem Schaltflächenabschnitt verbunden ist, wobei das Substrat auf seiner dem Schaltflächenabschnitt abgewandten Seite Leiterbahnen zur Anordnung von Halbleiterbauelementen, insbesondere Dioden, aufweist.

Bei der erfindungsgemäße Anordnung mit einer oben beschriebenen Verbindungseinrichtung und einem Photovoltaikmodul weist das Photovoltaikmodul eine Mehrzahl von Solarzellen und einen Rahmen auf, der bevorzugt aus Metall-, insbesondere Aluminium-, Profilelementen ausgebildet ist. Dieser Rahmen umschließt vorteilhafterweise somit die Gesamtheit aller in einer zweidimensionalen Matrix angeordneten Solarzellen des Photovoltaikmoduls allseitig.

Der Kontaktflächenabschnitt der Verbindungseinrichtung steht in thermischem Kontakt mit dem Rahmen des Photovoltaikmoduls. Dazu ist der Kontaktflächenabschnitt stoff- oder kraftschlüssig mit dem Rahmen verbunden. Eine bevorzugte stoffschlüssige Verbindung ist mittels eines leitfähigen Klebstoffes ausgebildet, während eine bevorzugte kraftschlüssige Verbindung mittels einer Niet-, einer Schraub-, oder einer Schnapp-Rastverbindung ausgebildet ist.

Hierbei steht in vorteilhafter Weise der Kontaktflächenabschnitt mit einer Innenseite des Rahmens in unmittelbarem thermischen Kontakt. Unter unmittelbar soll hier verstanden werden, dass zwei Flächen in direktem Kontakt miteinander sind oder dass zwischen den beiden Fläche ausschließlich eine dünne Schicht eines wärmeleitenden Materials, beispielhaft einer Wärmeleitpaste, angeordnet ist. Diese dünne Schicht weist vorzugsweise eine Dicke zwischen 5µm und 100µm auf.

Es versteht sich, dass die verschiedenen Ausgestaltungen der Erfindung einzeln oder in beliebigen Kombinationen realisiert sein können, um Verbesserungen zu erreichen. Insbesondere sind die vorstehend genannten und erläuterten Merkmale nicht nur in den angegebenen Kombinationen, sondern auch in anderen Kombinationen oder in Alleinstellung einsetzbar, ohne den Rahmen der vorliegenden Erfindung zu verlassen.

Weitere Erläuterung der Erfindung, vorteilhafte Einzelheiten und Merkmale ergeben sich aus der nachfolgenden Beschreibung der in den Fig. 1 bis 6 dargestellten Ausführungsbeispiele der erfindungsgemäßen Verbindungseinrichtung einer Anordnung hiermit oder von Teilen hiervon. Dabei zeigt:
Figur 1: den schematischen Aufbau einer Photovoltaikanlage mit einer Mehrzahl von Photovoltaikmodulen;
Figur 2: die schematische Anordnung eines Photovoltaikmoduls und einer erfindungsgemäßen Verbindungseinrichtung;
Figur 3: eine erfindungsgemäße Anordnung einer erfindungsgemäßen Verbindungseinrichtung mit einem Photovoltaikmodul in dreidimensionaler Darstellung;
Figur 4: eine erfindungsgemäße Anordnung einer ersten erfindungsgemäßen Verbindungseinrichtung mit einem Photovoltaikmodul in Schnittdarstellung;
Figur 5: eine erfindungsgemäße Anordnung einer zweiten erfindungsgemäßen Verbindungseinrichtung mit einem Photovoltaikmodul in Schnittdarstellung;
Figur 6: den inneren Aufbau einer ersten erfindungsgemäßen Verbindungseinrichtung in dreidimensionaler Darstellung.

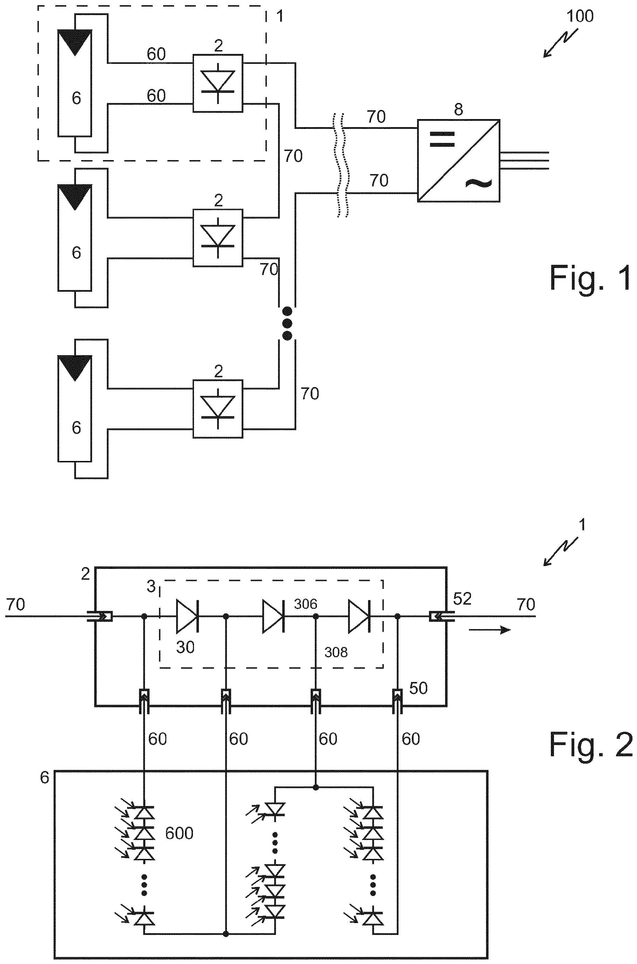

Figur 1 zeigt den schematischen Aufbau einer Photovoltaikanlage 100 mit einer Mehrzahl von Photovoltaikmodulen 6. Jedes Photovoltaikmodul 6 weist erste Verbindungsmittel 60 zur Verbindung der Solarzellen 600 (vgl. Fig. 2) des Photovoltaikmoduls 6 mit einer Verbindungseinrichtung 2 auf. Diese Verbindungseinrichtung 2 dient fachüblich der elektrischen Verbindung des Photovoltaikmoduls 6 mit weiteren Photovoltaikmodulen 6 bzw. deren zugeordneter Verbindungseinrichtungen 2 oder einem Stromrichter 8, insbesondere einem Wechselrichter. Hierbei ist es üblich die Photovoltaikmodule 6 mittels der zugeordneten Verbindungseinrichtungen 2 und zweiter Verbindungsmittel 70 seriell zu verbinden und diese dadurch entstandene Reihenschaltung mit dem Wechselrichter 8 zu verbinden.

Der Wechselrichter 8 dient fachüblich der Umwandlung des in den Photovoltaikmodulen 6 erzeugten Gleichstroms in einen Wechselstrom zur Einspeisung in ein entsprechendes Stromnetz. Grundsätzlich sind auch komplexere Konfigurationen aus Photovoltaikmodulen 6 und Stromrichtern 8 möglich, worin die Funktionalität der Verbindungseinrichtung 2 allerdings grundsätzlich gleich ist.

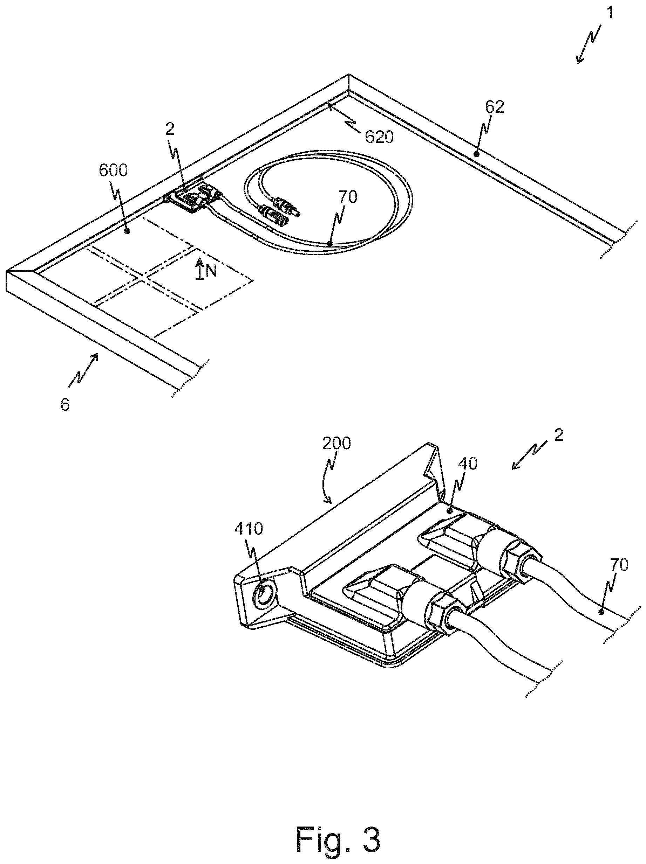

Figur 2 zeigt die schematische Anordnung 1, wie auch die elektrische Verbindung, eines Photovoltaikmoduls 6 und einer erfindungsgemäßen Verbindungseinrichtung 2. Bezüglich mechanischer Bestandteile der Anordnung 1, vgl. Fig. 3 bis 6. Das Photovoltaikmodul 6 besteht funktional und fachüblich aus einer Reihenschaltung einer Mehrzahl von Solarzellen 600, die in ebenso fachüblicher Weise eine Mehrzahl von Zwischenabgriffen aufweist. Die erst und letzte Solarzelle 600 der Reihenschaltung, wie auch die Zwischenabgriffe sind mittels erster Verbindungsmittel 60 mit ersten Anschlusselementen 50 einer Verbindungseinrichtung 2 verbunden.

Die Verbindungseinrichtung 2 weist funktional neben den genannten ersten Anschlusselementen 50 eine Schaltungsanordnung 3, hier bestehend aus einer Reihenschaltung von drei Dioden 30, sowie zweite Anschlusselemente 52 auf.

Die Dioden 30 der Schaltungsanordnung 3 sind derartig mit den zweiten Anschlusselementen 52 verbunden, dass ein Stromfluss in einer Photovoltaikanlage 100, gemäß Fig. 1, durch die Verbindungseinrichtung 2 auch möglich ist, wenn an diese Verbindungseinrichtung 2 kein Photovoltaikmodul angeschlossen oder wenn das angeschlossene Photovoltaikmodul 6 defekt ist. Der Strom innerhalb der Photovoltaikanlage 100 durchfließt die Verbindungseinrichtung 2 also in Durchlassrichtung der Dioden 30 der Schaltungsanordnung 3.

Die Dioden 30 der Schaltungsanordnung 3 sind ebenfalls fachüblich derart mit dem Photovoltaikmodul 6 elektrisch verbunden, dass jede dieser Dioden 30 eine Bypassdiode für eine zugeordnete Mehrzahl von in Reihe geschalteten Solarzellen 600 bildet.

Figur 3 zeigt eine erfindungsgemäße Anordnung 1 einer erfindungsgemäßen Verbindungseinrichtung 2 mit einem Photovoltaikmodul 6 in dreidimensionaler Darstellung, sowie in einem vergrößerten Ausschnitt die Verbindungseinrichtung 2 selbst. Das Photovoltaikmodul 6 weist eine Mehrzahl von Solarzellen 600 auf, die fachüblich in einer zweidimensionalen Matrix angeordnet sind und funktional, d.h. elektrisch, wie unter Fig. 2 beschrieben verschaltet sind. Diese matrixartige Anordnung ist hier nur angedeutet dargestellt. Zudem weist das Photovoltaikmodul 6 einen Rahmen 62 auf, der diese zweidimensionale Matrix von Solarzellen 600 allseitig, hier nur ausschnittsweise dargestellt, umschließt. Der Rahmen 62 besteht aus mehreren Metall-, insbesondere Aluminium-, Profilelementen.

Die Blickrichtung ist hier auf die Rückseite des Photovoltaikmoduls 6, als auf die der Bestrahlungsseite, die im Einsatz der Sonne zugewandt ist, gegenüber liegende Seite.

Auf dieser Rückseite des Photovoltaikmoduls 6 überragt der Rahmen 62 die Solarzellen 600 in deren Normalenrichtung N. An eine Innenseite 620 des Rahmens 62 ist ein Kontaktflächenabschnitt 200 der Verbindungseinrichtung 2 thermisch leitend mit dem Rahmen 62 verbunden, wobei Innenseite 620 hier bedeutet, dass der Rahmen 62 eine Fläche aufweist, die in Richtung der Solarzellen 600 des Photovoltaikmoduls 6 orientiert ist. Die Verbindung des Kontaktflächenabschnitts 200 der Verbindungseinrichtung 2 mit der Innenseite 620 des Rahmens 62 des Photovoltaikmoduls 6 ist kraftschlüssig ausgebildet. Besonders einfach herzustellen ist eine kraftschlüssige Verbindung mittels Nieten. Zur Ausbildung derartiger Nietverbindungen weist das Gehäuse 40 korrespondierende Ausnehmungen 410 auf. Alternativ kann die kraftschlüssige Verbindung insbesondere auch als Schraub oder vorteilhaft aus Sicht der Herstellung der Verbindung als Schnapp- Rastverbindung ausgebildet sein. Hierzu kann der Rahmen 62 Ausnehmungen aufweisen in welche Rastnasen des mechanischen Verbindungsmittels eingreifen und rasten können.
Das Gehäuse 40 der Verbindungseinrichtung 2 weist, hier dargestellt, weiterhin Anschlüsse zweiter Verbindungsmittel 70 auf. Diese zweiten Verbindungsmittel 70 sind fachüblich als Verbindungskabel ausgebildet und dienen jeweils zur Verbindung mit weiteren Verbindungseinrichtungen oder mit einem Wechselrichter.
Es ist besonders bevorzugt, wenn das Gehäuse 40 mehr- insbesondere zweiteilig ausgebildet ist, damit nach Anordnen der Verbindungseinrichtung 2 zum Rahmen 62 des Photovoltaikmoduls 6 ein Zugang beispielhaft zur Ausbildung von Verbindungen im Inneren des Gehäuses 40 möglich ist.
Die mechanische Verbindung des Gehäuses 40 mit den zweiten Verbindungsmitteln 70 kann als flüssigkeitsdichte Schraubverbindung beispielhaft gemäß IP 67 ausgeführt sein. Es kann auch vorteilhaft sein die zweiten Verbindungsmittel 70 einstückig mit einem Gehäuseteil auszuführen. Somit kann die Anzahl von Dichtelementen bis auf eine einzige Dichtung zwischen zwei Gehäuseteilen reduziert werden.

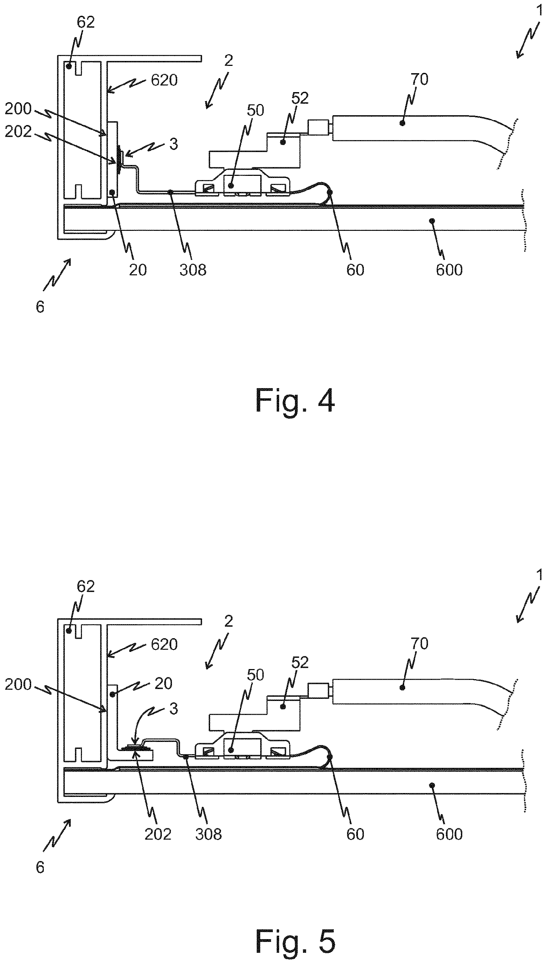

Figur 4 zeigt eine erfindungsgemäße Anordnung 1 einer ersten erfindungsgemäßen Verbindungseinrichtung 2 mit einem Photovoltaikmodul 6 in Schnittdarstellung. Dargestellt ist wiederum eine Solarzelle 600 und der Rahmen 62 des Photovoltaikmoduls 6, der die Solarzelle 600, bzw. die zweidimensional Matrix von Solarzellen, hier nur eindimensional sichtbar umschließt.
Weiterhin dargestellt, allerdings hier ohne umschließendes Gehäuse, ist die Verbindungseinrichtung 2. Diese weist einen thermisch leitfähigen Grundkörper 20 auf, der insbesondere dazu dient die in der Schaltungsanordnung 3 der Verbindungseinrichtung 2 entstehende Wärme abzuführen. Dieser Grundkörper 20 weist einen Kontaktflächenabschnitt 200 auf, der mit dem Rahmen 62 , hier mit der Innenseite 620 des Rahmens 62, in unmittelbaren thermischen Kontakt steht. Auf der gegenüberliegenden Seite ist auf dem Schaltflächenabschnitt 202 des flächigen Grundkörpers 20 die zu entwärmende Schaltungsanordnung 3 angeordnet. Diese ist gegenüber dem Grundkörper 20 elektrisch isoliert, damit keines der dort anliegenden Potentiale auf dem Rahmen des Photovoltaikmoduls 6 liegt.

Die Schaltungsanordnung 3, bestehend aus einer Mehrzahl von in Reihe geschalteten Dioden, vgl. Fig. 2, ist mittels interner Verbindungsmittel 308 mit ersten Anschlusselementen 50 der Verbindungseinrichtung 2 verbunden, die wiederum mittels erster Verbindungsmittel 60 mit den Solarzellen 600 verbunden sind. Diese elektrischen Verbindungen entsprechen denjenigen in Fig. 2 dargestellten Verbindungen.

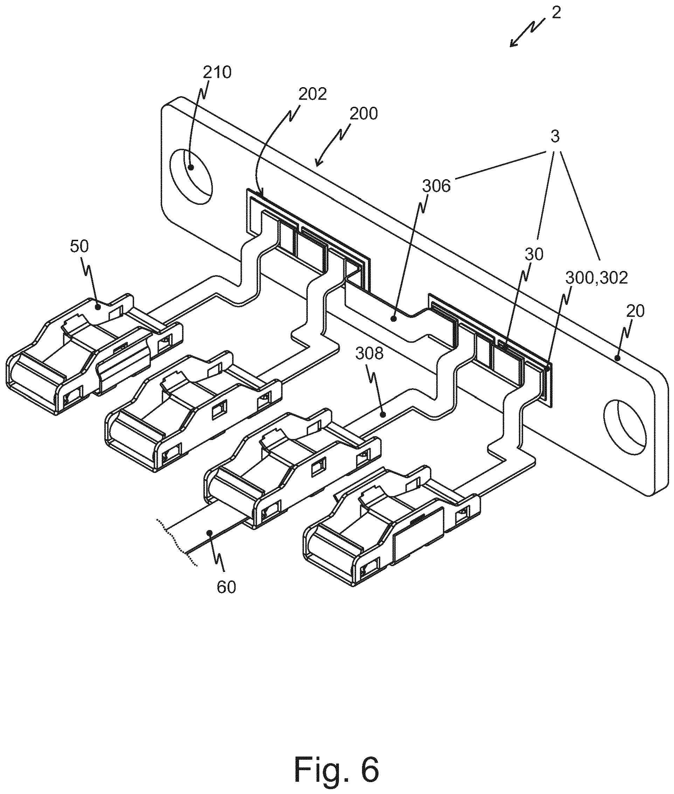

Fachübliche sind die ersten Verbindungsmittel 60 als Flachleiter, also bandartig, ausgebildet und in dieser Ausführungsform mittels einer Klemmvorrichtung des ersten Anschlusselements 50 mit diesem verbunden. Die internen Verbindungsmittel 308 sind ebenfalls als Flachleiter, allerdings bevorzugt als in Stanz-Biege-Technik hergestellte Formkörper, vgl. Fig. 6, ausgebildet und in bevorzugter Weise mit den ersten Anschlusselementen 50 in dieser Ausführungsform ebenfalls mittels einer Klemmvorrichtung verbunden.

Weiterhin dargestellt ist ein zweites Verbindungsmittel 70, das in dieser Ausführungsform ebenfalls mittels einer Klemmvorrichtung mit einem zweiten Anschlusselement 52 verbunden ist. In besonders bevorzugter Ausgestaltung sind die beiden zweiten Anschlusselemente 52 jeweils als eine Einheit mit einem zugeordneten ersten Anschlusselement 50 gemeinsam ausgebildet.

Figur 5 zeigt eine erfindungsgemäße Anordnung einer zweiten erfindungsgemäßen Verbindungseinrichtung 2 mit einem Photovoltaikmodul 6 in Schnittdarstellung. Der wesentliche Unterschied zur ersten Ausgestaltung gemäß Fig. 4 liegt in der Form des Grundkörpers 20, der hier "L-förmig" ausgestaltet ist. Hierbei schließt der Schaltflächenabschnitt 202 mit dem Kontaktflächenabschnitt 200 einen Winkel, hier einen 90° Winkel, ein.

Figur 6 zeigt den inneren Aufbau einer ersten erfindungsgemäßen Verbindungseinrichtung 2 in dreidimensionaler Darstellung. Dargestellt ist wiederum der thermisch leitfähige Grundkörper 20, der hier als flächiger Metallformkörper, aus Gründen der thermischen Leitfähigkeit vorteilhafterweise aus Kupfer ausgebildet und mit einer galvanisch abgeschiedenen Nickelschicht bedeckt, ausgebildet ist.

Der Grundkörper 20 weist einen Kontaktflächenabschnitt 200 zur thermischen Kontaktierung mit dem Rahmen 62 des Photovoltaikmoduls 6 auf. Dieser Kontaktflächenabschnitt 200 ist hier, aber grundsätzlich nicht notwendigerweise, die gesamte nicht sichtbare Rückseite des Grundkörpers 20. Dieser Grundkörper 20 weist zusätzlich zwei durchgehende Ausnehmungen 210 auf, die der Anordnung von mechanischen Verbindungsmitteln dienen. Diese mechanischen Verbindungsmittel können beispielhaft, wie oben ausgeführt, Nietverbindungen sein. Hierfür kann eine Hülse in der Ausnehmung 210 und in einer korrespondierenden Ausnehmung 410, vgl. Fig. 3, des nicht dargestellten Gehäuse angeordnet sein.

Grundsätzlich ist mindestens der Kontaktflächenabschnitt 200 vom Gehäuse 40 freigespart, wozu das Gehäuse eine Ausnehmung zur Aufnahme des Grundkörpers aufweist. Somit umschließt das Gehäuse 40, vgl. auch Fig. 3 - Detailzeichnung, den Grundkörper 20 ohne ihn an dem Kontaktflächenabschnitt 200 zu bedecken. Hierdurch kann der Kontaktflächenabschnitt 200 unmittelbar am Rahmen 62 des Photovoltaikmoduls 6 angeordnet werden.

Weiterhin dargestellt sind hier zwei Schaltflächenabschnitte 202 zur Anordnung einer Schaltungsanordnung 3 Diese Schaltflächenabschnitte 202 sind hier durch thermisch leitfähige und elektrisch isolierende Substrat 300 bedeckt, wobei diese Substrate 300 die Dioden 30 der Schaltungsanordnung 3 tragen. Hierzu weisen die Substrate 300 auf der dem Grundkörper 20 abgewandten Seite jeweils zwei voneinander isolierte Leiterbahnen 302 auf. Auf diesen Leiterbahnen 302 sind gemäß der Schaltung, gezeigt in Fig. 2, in fachüblicher Weise die Dioden 30, vorzugsweise ausgebildet als ungehauste Dioden, angeordnet. Ungehauste Dioden weisen gegenüber ebenfalls grundsätzlich vorsehbaren gehausten Dioden den Vorteil des geringeren Platzbedarfs auf.

Weiterhin sind interne Verbindungsmittel 306, 308 in dieser Ausführungsform mittels Stanz-Biege-Technik hergestellt, dargestellt. Von diesen internen Verbindungsmitteln dienen manche Verbindungsmittel 306 der internen Verbindung der Schaltungsanordnung, also der Dioden 30 untereinander, während andere interne Verbindungsmittel 308 der Verbindung mit den ersten Anschlusselementen 50 dienen. Zusätzlich ist aus Gründen der Verdeutlichung des externen Anschlusses der Verbindungseinrichtung 2 ein erstes Verbindungsmittel 60 eines ersten Anschlusselements 50 dargestellt. Hierbei ist, wie oben beschrieben, diese erstes Verbindungsmittel 60 als bandartiger Flachleiter ausgebildet.

## Patentansprüche

1. Verbindungseinrichtung (2) zur kraftschlüssigen Anordnung an einem Rahmen (62) eines Photovoltaikmoduls (6)
• mit einem thermisch leitfähigen Grundkörper (20), der als Metallformkörper ausgebildet ist, der mechanische Verbindungsmittel (210) zur kraftschlüssigen Verbindung, einen Kontaktflächenabschnitt (200) zur thermischen Kontaktierung und einen Schaltflächenabschnitt (202) zur Anordnung einer Schaltungsanordnung (3) aufweist, wobei die Schaltungsanordnung (3) mit diesem Schaltflächenabschnitt (202) thermisch leitend und elektrisch isolierend verbunden ist,
• wobei die Schaltungsanordnung (3) mindestens ein elektrisches Substrat (300) aufweist, das unmittelbar auf dem Schaltflächenabschnitt (202) angeordnet, thermisch leitend und elektrisch isolierend damit verbunden ist, wobei das Substrat (300) auf seiner dem Schaltflächenabschnitt (202) abgewandten Seite Leiterbahnen (302) und hierauf angeordnete ungehauste Halbleiterbauelemente (30), hier Dioden, aufweist.
• mit einem elektrisch isolierenden Gehäuse (40) das den Kontaktflächenabschnitt (200) freispart und
• mit ersten und zweiten Anschlusselementen (50, 52), wobei die ersten Anschlusselemente (50) zur elektrischen Verbindung der Schaltungsanordnung (3) mit Solarzellen (600) des Photovoltaikmoduls (6) ausgebildet sind und die zweiten Anschlusselemente (52) zur elektrischen Verbindung der Schaltungsanordnung (3) mit weiteren Komponenten (1, 8) einer Photovoltaikanlage (100) ausgebildet sind.

2. Verbindungseinrichtung nach Anspruch 1, wobei
das Gehäuse(40) mechanische Verbindungsmittel (410), insbesondere Hülsen, aufweist.

3. Verbindungseinrichtung nach einem der vorhergehenden Ansprüche, wobei die Schaltungsanordnung (3) eine Mehrzahl von in Reihe geschalteten Dioden (30) aufweist.

4. Anordnung mit einer Verbindungseinrichtung (2) nach einem der vorhergehenden Ansprüche und mit einem Photovoltaikmodul (6), wobei das Photovoltaikmodul (6) eine Mehrzahl von Solarzellen (600) und einen Rahmen (62) aufweist, wobei der Kontaktflächenabschnitt (200) der Verbindungseinrichtung (2) in thermischem Kontakt mit dem Rahmen (62) des Photovoltaikmoduls (6) ist und hierzu der Kontaktflächenabschnitt (200) kraftschlüssig mit dem Rahmen (62) verbunden ist, und wobei die Solarzellen (600) elektrisch leitend mit den ersten Anschlusselementen (50) der Verbindungseinrichtung (2) verbunden sind.

5. Anordnung nach Anspruch 4, wobei der Kontaktflächenabschnitt (200) mit einer Innenseite (620) des Rahmens (62) in unmittelbaren thermischen Kontakt steht.

6. Anordnung nach einem der vorhergehenden Ansprüche 4 oder 5, wobei der Rahmen (62) aus Metall-, insbesondere Aluminium-, Profilelementen ausgebildet ist.

7. Anordnung nach einem der vorhergehenden Ansprüche 4 bis 6, wobei der Rahmen (62) die Gesamtheit aller in einer zweidimensionalen Matrix angeordneten Solarzellen (600) des Photovoltaikmoduls (6) allseitig umschließt.

8. Anordnung nach einem der vorhergehenden Ansprüche 4 bis 7, wobei die kraftschlüssige Verbindung mittels einer Niet-, Schraub-, oder Schnapp-Rastverbindung ausgebildet ist.

## Claims

1. Connecting device (2) for force-fitting arrangement on a frame (62) of a photovoltaic module (6)
• comprising a thermally conductive main body (20) which is in the form of a shaped metal body which has mechanical connecting means (210) for force-fitting connection, a contact area section (200) for making thermal contact, and a button section (202) for arranging a circuit arrangement (3), wherein the circuit arrangement (3) is connected to the said button section (202) in a thermally conductive and electrically insulating manner,
• wherein the circuit arrangement (3) has at least one electrical substrate (300) which is arranged directly on the button section (202) and is connected to the said button section in a thermally conductive and electrically insulating manner, wherein the substrate (300) has conductor tracks (302) on its side which is averted from the button section (202) and unpackaged semiconductor components (30), here diodes, which are arranged on the said conductor tracks,
• comprising an electrically insulating housing (40) which leaves free the contact area section (200) and
• comprising first and second connection elements (50, 52), wherein the first connection elements (50) are designed for electrically connecting the circuit arrangement (3) to solar cells (600) of the photovoltaic module (6), and the second connection elements (52) are designed for electrically connecting the circuit arrangement (3) to further components (1, 8) of a photovoltaic system (100).

2. Connecting device according to Claim 1, wherein the housing (40) has mechanical connecting means (410), in particular sleeves.

3. Connecting device according to either of the preceding claims, wherein the circuit arrangement (3) has a plurality of diodes (30) which are connected in series.

4. Arrangement comprising a connecting device (2) according to one of the preceding claims and comprising a photovoltaic module (6), wherein the photovoltaic module (6) has a plurality of solar cells (600) and a frame (62), wherein the contact area section (200) of the connecting device (2) is in thermal contact with the frame (62) of the photovoltaic module (6) and, to this end, the contact area section (200) is connected to the frame (62) in a force-fitting manner, and wherein the solar cells (600) are connected to the first connection elements (50) of the connecting device (2) in an electrically conductive manner.

5. Arrangement according to Claim 4, wherein the contact area section (200) is in direct thermal contact with an inner side (620) of the frame (62).

6. Arrangement according to either of the preceding Claims 4 and 5, wherein the frame (62) is formed from profiled metal, in particular aluminium, elements.

7. Arrangement according to one of the preceding Claims 4 to 6, wherein the frame (62) encloses all of the solar cells (600), which are arranged in a two-dimensional matrix, of the photovoltaic module (6) on all sides.

8. Arrangement according to one of the preceding Claims 4 to 7, wherein the force-fitting connection is formed by means of a rivet, screw or snap-action latching connection.

## Revendications

1. Dispositif de liaison (2), destiné à être placé par complémentarité de force sur un cadre (62) d'un module photovoltaïque (6),
• pourvu d'un corps de base (20) conducteur thermique, qui est conçu sous la forme d'un corps moulé métallique, qui comporte des moyens de liaison mécaniques (210) pour la liaison par complémentarité de force, un segment de surface de contact (200) pour la mise en contact thermique et un segment de surface de commutation (202) pour la disposition d'un agencement de circuit (3), l'agencement de circuit (3) étant relié de manière conductrice thermique et isolante électrique avec ledit segment de surface de commutation (202),
• l'agencement de circuit (3) comportant au moins un substrat (300) électrique, qui est placé directement sur le segment de surface de commutation (202), et est relié avec celui-ci de manière conductrice thermique et isolante électrique, sur sa face opposée au segment de surface de commutation (202), le substrat (300) comportant des pistes conductrices (302) et des éléments semi-conducteurs (30) nus, dans le cas présent des diodes, placés sur celles-ci.
• pourvu d'un boîtier (40) isolant électrique, évidant le segment de surface de contact (200) et
• pourvu de premiers et de deuxièmes éléments de raccordement (50, 52), les premiers éléments de raccordement (50) étant conçus pour la liaison électrique de l'agencement de circuit (3) avec des cellules solaires (600) du module photovoltaïque (6) et les deuxièmes éléments de raccordement (52) étant conçus pour la liaison électrique de l'agencement de circuit (3) avec d'autres composants (1, 8) d'une installation photovoltaïque (100).

2. Dispositif de liaison selon la revendication 1, le boîtier (40) comportant des moyens de liaison mécaniques (410), notamment des douilles.

3. Dispositif de liaison selon l'une quelconque des revendications précédentes, l'agencement de circuit (3) comportant une pluralité de diodes (30) montées en série.

4. Agencement, pourvu d'un dispositif de liaison (2) selon l'une quelconque des revendications précédentes et d'un module photovoltaïque (6), le module photovoltaïque (6) comportant une pluralité de cellules solaires (600) et un cadre (62), le segment de surface de contact (200) du dispositif de liaison (2) étant en contact thermique avec le cadre (62) du module photovoltaïque (6) et à cet effet, le segment de surface de contact (200) étant relié par complémentarité de force avec le cadre (62) et les cellules solaires (600) étant reliées de manière conductrice d'électricité avec les premiers éléments de raccordement (50) du dispositif de liaison (2).

5. Agencement selon la revendication 4, le segment de surface de contact (200) étant en contact thermique direct avec une face intérieure (620) du cadre (62).

6. Agencement selon l'une quelconque des revendications précédentes 4 ou 5, le cadre (62) étant conçu en éléments profilés métalliques, notamment en aluminium.

7. Agencement selon l'une quelconque des revendications précédentes 4 à 6, le cadre (62) entourant de toute part la totalité de toutes les cellules solaires (600) du module photovoltaïque (6) placées dans une matrice bidimensionnelle.

8. Agencement selon l'une quelconque des revendications précédentes 4 à 7, la liaison par complémentarité de force étant conçue au moyen d'une liaison par rivetage, par vissage, par déclic ou par enclenchement.
